(19) Europäisches Patentamt / European Patent Office / Office européen des brevets

(11) **EP 4 365 136 A1**

(12) **EUROPEAN PATENT APPLICATION**
published in accordance with Art. 153(4) EPC

(43) Date of publication:
**08.05.2024 Bulletin 2024/19**

(21) Application number: **22833273.0**

(22) Date of filing: **30.06.2022**

(51) International Patent Classification (IPC):
*C01G 23/053* (2006.01)

(52) Cooperative Patent Classification (CPC):
C01G 23/053

(86) International application number:
**PCT/JP2022/026197**

(87) International publication number:
**WO 2023/277127 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2021 JP 2021110862**

(71) Applicant: **Ishihara Sangyo Kaisha, Ltd.**
**Osaka-shi, Osaka 550-0002 (JP)**

(72) Inventor: **HOSOKAWA, Takuya**
**Osaka-shi, Osaka 550-0002 (JP)**

(74) Representative: **Grünecker Patent- und Rechtsanwälte**
**PartG mbB**
**Leopoldstraße 4**
**80802 München (DE)**

(54) **TITANIUM OXIDE PARTICLES AND METHOD FOR PRODUCING SAME**

(57) The present invention produces titanium oxide particles which have a sufficiently small average aggregate particle diameter (D50), while containing much less amorphous components. According to the present invention, a solution containing titanium (oxy)chloride and a carboxylic acid and/or a salt thereof is heated at a temperature that is not less than 95°C but not more than the boiling point of the solution (first hydrolysis step); and a solution, which is obtained by mixing a solution that contains a product of the first hydrolysis step with titanium (oxy)chloride and a carboxylic acid and/or a salt thereof, is heated at a temperature that is not less than 95°C but not more than the boiling point of the solution (second hydrolysis step). In addition, the present invention provides titanium oxide particles which have an average aggregate particle diameter (D50) of 15 nm to 200 nm, while having a content of amorphous components of 7% by mass or less.

FIG. 1

**Description**

**TECHNICAL FIELD**

The present invention relates to titanium oxide particles and a method for manufacturing the same.

**BACKGROUND ART**

Barium titanate is used as a dielectric material that forms an electronic component such as a multilayer ceramic capacitor (MLCC). High-purity titanium oxide particles are used for manufacturing barium titanate.

With miniaturization of electronic devices, there is an increasing demand for miniaturization of the MLCC. Thus, barium titanate of which particle diameter is smaller required, and titanium oxide particles serving as a material thereof are also required to have a smaller particle diameter.

Examples of a method for manufacturing high-purity titanium oxide particles include a "gas phase method" of oxidizing or hydrolyzing a titanium (oxy)chloride such as titanium tetrachloride in a gas phase, and a "liquid phase method" of hydrolyzing a titanium (oxy)chloride such as titanium tetrachloride in a liquid phase. In general, the titanium oxide particles obtained by the "liquid phase method" exhibit less mixing of chlorine component derived from the material as compared to those obtained by the "gas phase method", and thus are appropriate for a material of barium titanate.

However, in the "liquid phase method", since titanium oxide particles are manufactured in a solution, primary particles of titanium oxide are likely to be agglomerated to form agglomerated particles. Therefore, various attempts have been made to reduce agglomeration of primary particles in the "liquid phase method" to make the agglomerated particle diameter of titanium oxide smaller.

For example, Patent Literature 1 describes a method for manufacturing titanium oxide particles in which a solution containing titanium tetrachloride and citric acid is heated at 92°C (i.e., first hydrolysis), titanium tetrachloride is further added to a solution containing a product after the first hydrolysis, followed by heating at 92°C (i.e., second hydrolysis).

Patent Literature 1 also describes a method for manufacturing titanium oxide particles in which an alkali is mixed in an aqueous solvent containing a titanium (oxy)chloride so that the pH of the aqueous solvent is in the range from 0 to 9, followed by heating to a temperature from 50°C to 110°C (i.e., first hydrolysis), and then a titanium (oxy)chloride is mixed in an aqueous solvent containing a product obtained by the first hydrolysis to adjust the pH to the range of 1 or less, followed by heating to a temperature from 50°C to 110°C (i.e., second hydrolysis). (However, any examples corresponding to this manufacturing method are not described therein.)

According to Patent Literature 1, it is said that titanium oxide particles having a small primary particle diameter and a small agglomerated particle diameter are obtained through such a two-step hydrolysis process.

Patent Literature 2 describes a method for manufacturing titanium oxide particles in which an aqueous solution containing ammonia is added to a solution containing titanium tetrachloride and citric acid to hydrolyze a part of titanium tetrachloride (i.e., first hydrolysis), and a solution containing a product after the first hydrolysis is heated at 90°C to hydrolyze remaining titanium tetrachloride (i.e., second hydrolysis). Patent Literature 2 describes that titanium oxide particles in which the degree of agglomeration is small are obtained through such a two-step hydrolysis process.

Patent Literature 3 describes a method for manufacturing titanium oxide particles in which an aqueous solution containing 34.5 g/L (in terms of $TiO_2$) of titanium tetrachloride and ammonium acetate is heated, an ammonia water is added when the temperature reaches 70°C, and then the solution prepared thereby is heated at the boiling point of the prepared solution. In addition, Patent Literature 3 describes that the titanium oxide particles thus manufactured have high crystallinity.

**CITATION LIST**

**PATENT LITERATURE**

PATENT LITERATURE 1: WO 2016/002755 A1
PATENT LITERATURE 2: WO 2019/189307 A1
PATENT LITERATURE 3: JP 2011-63496 A

## SUMMARY OF INVENTION

### TECHNICAL PROBLEM

The titanium oxide particles manufactured by the "liquid phase method" in Patent Literature 1 and Patent Literature 2 have the following problem: the amount of an amorphous component (i.e., amorphous titanium oxide component) that is contained in addition to a crystalline component (i.e., crystalline titanium oxide component) and is stably present in a high temperature range is relatively large.

In a case where the content of the above amorphous component is large, differences in properties and functions between the amorphous component and the crystalline component easily appears. In addition, the large content of the above amorphous component is understood as becoming the cause of the following: the primary particles of titanium oxide are bound to each other via the amorphous component interposed therebetween, thereby being unlikely to easily disintegrate the agglomerated particles of titanium oxide, and so on.

These kinds of things can lead to, for example, in a case where a composite oxide such as barium titanate is synthesized, nonuniformity of reactivity with other materials, deterioration of handleability during mixing with other materials, or the like. Therefore, a method capable of further reducing the content of the amorphous component contained in the titanium oxide particles is required.

Also, Patent Literature 3 describes that the titanium oxide particles manufactured by the manufacturing method of the Patent literature have high crystallinity (eventually, a low amorphous component amount) based on the value represented by a "specific surface area equivalent diameter/crystallite diameter". However, there is a problem that from the above-described value represented by the "specific surface area equivalent diameter/crystallite diameter", the amount of the amorphous component that is stably present in a high temperature range cannot be quantified, and the amount of the amorphous component cannot be specifically specified. In addition, the titanium oxide particles obtained by the manufacturing method of Patent Literature 3 contain the amorphous component specified in the present application in relatively a large amount. For example, further reduction of the amount of the amorphous component which is stably present in a high temperature range is required.

### SOLUTION TO PROBLEM

The present inventors have extensively conducted studies on a method for reducing the content of an amorphous component (specifically, amorphous titanium oxide component) that occurs during hydrolysis of a titanium (oxy)chloride such as titanium tetrachloride. As a result, the present inventors have found that titanium oxide particles in which the content of an amorphous component is small can be obtained by controlling the hydrolysis temperature of a titanium (oxy)chloride, the presence of a carboxylic acid in a solution during hydrolysis, and the like, and thus have completed the present invention.

That is, the present invention includes the following inventions.

(1) Titanium oxide particles, wherein an average agglomerated particle diameter (D50) is 15 nm or more to 200 nm or less, and a content of an amorphous component is 7 mass% or less.

(2) The titanium oxide particles according to (1), wherein a BET specific surface area is 100 $m^2$/g or more to 400 $m^2$/g or less.

(3) A method for manufacturing titanium oxide particles, comprising:

a first hydrolysis step of heating a solution containing a titanium (oxy)chloride and a carboxylic acid and/or a salt thereof at a temperature from 95°C or more to a boiling point of the solution in the first hydrolysis step or less; and
a second hydrolysis step of heating a solution prepared by mixing a solution containing a product after the first hydrolysis step, a titanium (oxy)chloride, and a carboxylic acid and/or a salt thereof at a temperature from 95°C or more to a boiling point of the solution prepared in the second hydrolysis step or less.

(4) The method for manufacturing titanium oxide particles according to (3), wherein in the second hydrolysis step, a solution containing the titanium (oxy)chloride and the carboxylic acid and/or the salt thereof is mixed with the solution containing the product after the first hydrolysis step.

(5) The method for manufacturing titanium oxide particles according to (3) or (4), wherein in the second hydrolysis step, the solution containing the titanium (oxy)chloride and the carboxylic acid and/or the salt thereof is intermittently or continuously added to the solution containing the product after the first hydrolysis step.

(6) A method for manufacturing titanium oxide particles, comprising:

a first hydrolysis step of mixing a solution containing a titanium (oxy)chloride and a carboxylic acid and/or a salt thereof with an alkali at a temperature from 20°C or more to 65°C or less; and

a second hydrolysis step of heating a solution prepared by mixing a solution containing a product after the first hydrolysis step, a titanium (oxy)chloride, and a carboxylic acid and/or a salt thereof at a temperature from 95°C or more to a boiling point of the solution prepared in the second hydrolysis step or less.

(7) The method for manufacturing titanium oxide particles according to (6), wherein in the first step hydrolysis step of performing hydrolysis by neutralization, the solution containing the titanium (oxy)chloride and the carboxylic acid and/or the salt thereof is added to the alkali.

## ADVANTAGEOUS EFFECTS OF INVENTION

It has been found the following facts: according to the method for manufacturing titanium oxide particles of the present invention, titanium oxide particles can be manufactured in which the average agglomerated particle diameter (D50) is sufficiently small and an amorphous component that is stably present in a high temperature range is further reduced; and since the amorphous component affects various characteristics such as D50, it is important that the amount of the amorphous component is reduced.

## BRIEF DESCRIPTION OF DRAWINGS

FIG. 1 is an electron micrograph of titanium oxide particles of Example 1.
FIG. 2 is an electron micrograph of titanium oxide particles of Example 2.
FIG. 3 is an electron micrograph of titanium oxide particles of Example 3.
FIG. 4 is an electron micrograph of titanium oxide particles of Comparative Example 1.
FIG. 5 is an electron micrograph of titanium oxide particles of Comparative Example 2.
FIG. 6 is an X-ray diffraction spectrum of titanium oxide particles of Example 1.
FIG. 7 is an X-ray diffraction spectrum of titanium oxide particles of Example 3.
FIG. 8 is a DSC curve of titanium oxide particles of Example 1.
FIG. 9 is a DSC curve of titanium oxide particles of Example 3.
FIG. 10 is a DSC curve of titanium oxide particles of Comparative Example 1.
FIG. 11 is a DSC curve of titanium oxide particles of Comparative Example 2.

## DESCRIPTION OF EMBODIMENTS

The titanium oxide particles of the present invention have a small agglomerated particle diameter and also have a very small content of an amorphous component. Specifically, the average agglomerated particle diameter (D50) is 15 nm or more to 200 nm or less, and the content of the amorphous component is 7 mass% or less.

In the titanium oxide particles of the present invention, the purity of titanium oxide is high and the content of impurities is small. The purity of titanium oxide is preferably 99.0 mass% or more, more preferably 99.5 mass% or more, and still more preferably 99.9 mass% or more in terms of $TiO_2$. The above impurities can be measured by a known method, and can be measured using, for example, X-ray fluorescence spectrometry, ICP analysis, or the like.

The "titanium oxide" of the titanium oxide particles of the present invention includes hydrous titanium oxide, hydrated titanium oxide, metatitanic acid, orthotitanic acid, and the like besides titanium dioxide and titanium monoxide.

The titanium oxide particles of the present invention may have any crystalline type of an anatase type, a rutile type, and a brookite type. Here, the crystalline type of the titanium oxide particles of the present invention may be a mixture of two or more crystalline types thereof, or may partially contain an amorphous type. The anatase type is preferred for manufacturing a titanium composite oxide, and the anatase type is preferred even in a case of being used in a photocatalyst or the like. The crystalline type of the titanium oxide particles is determined from an X-ray diffraction spectrum measured by means of an X-ray diffractometer (e.g., Ultima IV, manufactured by Rigaku Corporation).

In a case where the crystalline type of the titanium oxide particles of the present invention is an anatase type, a rutile ratio thereof is preferably 10% or less, and more preferably 5% or less. The rutile ratio means the content ratio of the rutile-type titanium oxide in all the titanium oxide particles, and is calculated based on "Equation 2" described later.

The particle size distribution of the titanium oxide particles is determined by means of a dynamic light scattering particle size distribution analyzer (e.g., NANOTRAC (registered trademark) WAVE II EX150, manufactured by MicrotracBEL Corporation) or the like. As described later, a sample prepared by adding a polycarboxylic acid-based dispersant to a slurry of the titanium oxide particles, further adding a media (for example, zircon beads) thereto, and then dispersing the resultant with a disperser is measured.

In the particle size distribution measured as described above, a cumulative 50% particle size in volume-based cumulative particle-size distribution is defined as the average agglomerated particle diameter (D50). The average agglomerated particle diameter (D50) is preferably small, and specifically 15 nm or more to 200 nm or less, preferably 15 nm or more to 100 nm or less, more preferably 15 nm or more to 90 nm or less, and still more preferably 15 nm or more to 80 nm or less.

The amorphous component contained in the titanium oxide particles of the present invention is quantified according to a known method (specifically, the method described in the reference: "Satoshi Kawase, Kenichi Sugimoto, Rise Fujiwara, Satomi Ono, BUNSEKI KAGAKU, Vol. 59, No. 10, pp. 921-926 (2010)"). Specifically, a thermal history when the heating temperature of a sample of titanium oxide particles is changed is measured as a DSC curve by means of a differential scanning calorimeter (DSC). In the DSC curve, the crystallization heat $\Delta H$ (J/g) is calculated from the area of an exothermic peak detected when the amorphous component contained in the titanium oxide particles is transferred to an anatase type or the like by heating.

As for the above exothermic peak, it has been known that one derived from the crystal transition of the amorphous component of titanium oxide is detected in the range from 300°C to 600°C, and the crystallization heat $\Delta H$ (J/g) is calculated from the area of this exothermic peak.

When an organic substance such as a carboxylic acid is used as a material in manufacturing the titanium oxide particles, there is a case where the titanium oxide particles contain the organic substance derived from the material. When the titanium oxide particles containing such an organic substance are measured by means of a differential scanning calorimeter, there is a case where an exothermic peak of the organic substance is detected to thereby observe a plurality of exothermic peaks in the measurement temperature range from 300°C to 600°C. In such a case, the crystallization heat $\Delta H$ (J/g) is calculated by excluding the exothermic peak derived from the organic substance. The exothermic peak derived from the organic substance can be determined, for example, based on whether or not the mass loss of the sample occurs while the sample is heated. If the mass loss of the sample occurs together with an exothermic peak seen in the DSC curve, it can be determined that the peak is an exothermic peak derived from the decomposition of the organic substance.

Of course, the method for determining an exothermic peak derived from the amorphous component is not limited to the above-described method, and determination thereof can be comprehensively made by combining various known methods.

X-ray diffraction spectra of the sample heated at different temperatures are measured with an X-ray diffractometer, and the amorphous component contained in the above heated sample is quantified by a method according to Rietveld analysis. By the above-described method, the heating temperature at which the amount of the amorphous component contained in the sample is less than 1% is determined. It can be determined that the exothermic peak in the DSC observed around the heating temperature (that is, the temperature at which the amorphous component in the sample is transferred to a crystalline component of an anatase type or the like) is an exothermic peak derived from the amorphous component. The method for quantifying the amorphous component by means of Rietveld analysis is described in a reference (specifically, "Satoshi Kawase, Kenichi Sugimoto, Rise Fujiwara, Satomi Ono, BUNSEKI KAGAKU, Vol. 59, No. 10, pp. 921-926 (2010)").

The baseline for calculating the area of the above exothermic peak is a straight line connecting the measurement temperature at the rise of the exothermic peak derived from the amorphous component and the measurement temperature at which the peak disappears. As the measurement temperature at which the peak disappears, a heating temperature specified by means of Rietveld analysis or a DSC curve for the sample heated at the above-described different temperatures can be used.

The amount of the amorphous component contained in the titanium oxide particles of the present invention is calculated based on the following Equation 1 using the value of the crystallization heat $\Delta H$ (J/g) of the titanium oxide particles of the present invention calculated as described above and the value of the crystallization heat $\Delta H_{std}$ (J/g) of a reference sample (specifically, amorphous titanium oxide) containing the amorphous component in an amount of 100 mass%.

Amount of amorphous component (unit: mass%) in measurement sample = $\Delta H/\Delta H_{std} \times 100$     (Equation 1)

As the crystallization heat $\Delta H_{std}$ (J/g) of the reference sample (specifically, amorphous titanium oxide) containing the amorphous component in an amount of 100 mass%, a literature value (217 J/g) shown in a reference (specifically, "B. Ohtani, Y. Ogawa, S. Nishimoto: J. Phys. Chem., B, 101, 3746 (1997)") is used.

The content of the amorphous component in the titanium oxide particles of the present invention calculated as described above is 7 mass% or less, preferably 0.5 mass% or more to 7 mass% or less, and more preferably 0.5 mass% or more to 5 mass% or less.

The amorphous component of the titanium oxide particles of the present invention is a stably present amorphous component such as is crystallized in a high temperature range (specifically, temperature range from 300°C to 600°C). It is understood that such an amorphous component affects various characteristics of the titanium oxide particle (for example, disintegrability). In order to quantify such an amorphous component, DSC measurement is performed in which the measurement sample is heated to a high temperature range. On the other hand, in Patent Literature 3 described above, a value represented by the "specific surface area equivalent diameter/crystallite diameter" is described as an index of the amount of the amorphous component. However, the above-described index cannot distinguish between the amorphous component that is stably present in the high temperature range and the other components. In other words, the amount of the amorphous component in the titanium oxide particles of the present invention cannot be quantified according to the measurement method (i.e., measurement method of using the "specific surface area equivalent diameter/crystallite diameter") described in Patent Literature 3.

The BET specific surface area of the titanium oxide particles of the present invention is preferably 100 $m^2/g$ or more to 400 $m^2/g$ or less, and more preferably 150 $m^2/g$ or more to 400 $m^2/g$ or less.

The BET specific surface area can be determined by means of a Surface Area Analyzer (e.g., FlowSorbII 2300, manufactured by Shimadzu Corporation) by a nitrogen adsorption method (i.e., BET method).

A first method for manufacturing titanium oxide particles of the present invention is a method in which a titanium (oxy)chloride is thermally hydrolyzed in a solution, and the method includes a first hydrolysis step and a second hydrolysis step. In the hydrolysis method, both the first hydrolysis step and second hydrolysis step are thermal hydrolysis.

Also, a second method for manufacturing titanium oxide particles of the present invention is a method in which a titanium (oxy)chloride is hydrolyzed by neutralization with an alkali, and then a product after being hydrolyzed by neutralization is thermally hydrolyzed in a solution together with a titanium (oxy)chloride. In this method, the hydrolysis by neutralization corresponds to the first hydrolysis step, and the thermal hydrolysis corresponds to the second hydrolysis step.

In both the first method for manufacturing and the second method for manufacturing, nuclei of titanium oxide particles are generated in the first hydrolysis step, and the nuclei generated in the first hydrolysis step are grown in the second hydrolysis step.

<First method for manufacturing titanium oxide particles in the present invention>

Hereinafter, the first method for manufacturing titanium oxide particles of the present invention will be described in detail.

In the first hydrolysis step of the first method for manufacturing titanium oxide particles, first, a solution containing a titanium (oxy)chloride and a carboxylic acid and/or a salt thereof is prepared. The "titanium (oxy)chloride" means titanium chloride or titanium oxychloride. As the "titanium (oxy)chloride", titanium tetrachloride, titanium trichloride, titanium oxychloride, or the like can be used. Among them, titanium tetrachloride is preferred.

The "carboxylic acid and/or the salt thereof' includes a monocarboxylic acid, a poly(multivalent) carboxylic acid and salts thereof. The carboxylic acid and/or its salt forms a complex with a titanium (oxy)chloride in a solution to stabilize the titanium (oxy)chloride. Examples of the "carboxylic acid and/or the salt thereof' include those described in the following (a) to (g).

(a) Carboxylic acid: for example, formic acid, acetic acid, or propionic acid.
(b) Poly(multivalent) carboxylic acid: particularly, dicarboxylic acid or tricarboxylic acid, for example, oxalic acid or fumaric acid.
(c) Hydroxy poly(multivalent) carboxylic acid: particularly, hydroxy di- or hydroxy tricarboxylic acid, for example, malic acid, citric acid, or tartronic acid.
(d) Polyhydroxymonocarboxylic acid: for example, glucoheptonic acid, or gluconic acid.
(e) Poly(multivalent)-hydroxycarboxylic acid: for example, tartaric acid.
(f) Dicarboxylic amino acid and amide corresponding to it: for example, aspartic acid, asparagine (2-amino-3-carbamoylpropanoic acid), or glutamic acid.
(g) Hydroxylated or non-hydroxylated monocarboxylic amino acids: for example, lysine, serine, or threonine.

As the carboxylic acid described above, a hydroxy poly(multivalent) carboxylic acid is preferred, and citric acid is more preferred. As the salt of the carboxylic acid, any salt can be used without limitation, and for example, a salt of an alkali metal such as sodium or potassium, an ammonium salt, or the like can be used.

In the first method for manufacturing titanium oxide particles of the present invention, the titanium (oxy)chloride and the carboxylic acid and/or the salt are mixed to prepare a solution before the first hydrolysis reaction. If necessary, an aqueous solvent may be mixed with the solution. The aqueous solvent indicates water or a solvent prepared by mixing water with an organic solvent such as an alcohol. In a case where the organic solvent is mixed, it is preferable that the content of the organic solvent is approximately 10 mass% or less of the amount of the aqueous solvent.

In the first hydrolysis step, the order of mixing the titanium (oxy)chloride, the carboxylic acid and/or the salt thereof, and the aqueous solvent is not particularly limited. For example, it is also allowable that a solution in which the carboxylic acid and/or the salt thereof and the aqueous solvent that are mixed in advance is prepared, and then this prepared solution is mixed with the titanium (oxy)chloride; it is also allowable that a solution in which the titanium (oxy)chloride and the aqueous solvent are mixed in advance is prepared, and then this prepared solution is mixed with the carboxylic acid and/or the salt thereof; it is also allowed that a solution in which the titanium (oxy)chloride and the carboxylic acid and/or the salt thereof are mixed in advance is prepared, and then this prepared solution is mixed with the aqueous solvent; and it is also allowed that all of the aqueous solvent, the carboxylic acid and/or the salt thereof, and the titanium (oxy)chloride are simultaneously mixed.

The concentration of the titanium (oxy)chloride in the first hydrolysis step is preferably 10 g/L or more to 100 g/L or less, and more preferably 10 g/L or more to 70 g/L or less, in terms of titanium oxide ($TiO_2$).

This enables the hydrolysis reaction in the first hydrolysis step to be definitely completed, thereby more effectively avoiding that the unreacted titanium (oxy)chloride remains in the solution. When the unreacted titanium (oxy)chloride remains in the solution, the unreacted titanium (oxy)chloride is hydrolyzed or neutralized under unintended conditions to generate the amorphous component in a step after performing the first hydrolysis step, for example, in a step of adjusting the pH to the range from 6 or more to 8 or less when the hydrolysate is filtered.

The mixing amount of the carboxylic acid and/or the salt thereof used in the first hydrolysis step is preferably 0.2 mol% or more to 4.0 mol% or less, and more preferably 0.4 mol% or more to 2.0 mol% or less, relative to the amount of the titanium (oxy)chloride.

As described above, the carboxylic acid has an effect of stabilizing the titanium (oxy)chloride in the solution. It is preferable that the carboxylic acid and/or the salt thereof be present in the solution in a mixed amount within the above range when generating nuclei of titanium oxide particles by heating in the first hydrolysis step. Herewith, the hydrolysis reaction of titanium (oxy)chloride is controlled until the predetermined temperature is reached, and the generation of amorphous components due to unintended hydrolysis reactions can be more effectively inhibited.

On the other hand, from the viewpoint of more effectively avoiding the following problems: when the mixing amount of the carboxylic acid in the solution is too large, the reaction in the first hydrolysis step does not sufficiently proceed due to the strong stabilizing effect, and thus a sufficient amount of the nuclei of the titanium oxide particles cannot be generated, it is preferable that the mixing amount of the carboxylic acid used in the first hydrolysis step is in the above-described range.

Also, the rutile ratio of the finally manufactured titanium oxide particles can be reduced by the presence of the carboxylic acid and/or the salt thereof in the solution in the first hydrolysis step.

In the first hydrolysis step, the titanium (oxy)chloride is hydrolyzed by setting the temperature of the solution prepared as described above to the range from 95°C or more to the boiling point of the solution prepared as described above or less. The temperature of the first hydrolysis is more preferably 97°C or more to the boiling point of the solution prepared as described above or less. By sufficiently proceeding the hydrolysis reaction of the titanium (oxy)chloride in the above-described temperature range, the remaining unreacted titanium (oxy)chloride in the solution can be avoided, and the generation of the amorphous component due to unintended hydrolysis or neutralization in the subsequent step can be further reduced.

It is desirable that the temperature of the solution is kept within the above predetermined temperature range for the period of several tens of minutes to several hours.

The pH of the solution in the first hydrolysis step is preferably adjusted to the range of 1 or less, and more preferably the range from -1 or more to 1 or less. This enables the hydrolysis reaction of the titanium (oxy)chloride to be controlled and the generation of the amorphous component due to unintended hydrolysis or neutralization to be more effectively reduced. The pH can be adjusted by the amount of the titanium (oxy)chloride in the solution, the mixing amount of the carboxylic acid and/or the salt thereof, or the like. Since the amorphous component is likely to be generated when the titanium (oxy)chloride is neutralized with the addition of an alkali, it is preferable that the titanium (oxy)chloride is hydrolyzed by heating without any addition of an alkali in the first hydrolysis step.

Following the above first hydrolysis step, a second hydrolysis step is performed. In the second hydrolysis step, a solution prepared by mixing the solution containing the product (specifically, nuclei of titanium oxide particles) after the first hydrolysis step, the titanium (oxy)chloride, and the carboxylic acid is heated to the temperature range from 95°C or more to the boiling point of the solution prepared in the second hydrolysis step or less.

As the titanium (oxy)chloride and the carboxylic acid and/or the salt thereof used in the second hydrolysis step, those similar to in the first hydrolysis step described above can be used. The mixing amount of the titanium (oxy)chloride can be appropriately set according to the desired agglomerated particle diameter of titanium oxide and the desired BET specific surface area, and is, for example, preferably 0.4 mol or more to 20 mol or less, more preferably 0.8 mol or more to 10 mol or less, and still more preferably 1 mol or more to 5 mol or less, relative to 1 mol of the product of the first hydrolysis step.

In the second hydrolysis step, the order of mixing the solution containing the product after the first hydrolysis step, the titanium (oxy)chloride, and the carboxylic acid and/or the salt thereof is not particularly limited. For example, it is also allowable that the titanium (oxy)chloride and the carboxylic acid and/or the salt thereof are separately added to the solution containing the product after the first hydrolysis step; and it is also allowable that a mixture in which the titanium (oxy)chloride and the carboxylic acid and/or the salt thereof are mixed in advance is prepared, and then this mixture is added to the solution containing the product after the first hydrolysis step. Also, it is allowable that a mixture in which the titanium (oxy)chloride and the carboxylic acid and/or the salt thereof are mixed in advance is prepared, and then to this mixture is added the solution containing the product after the first hydrolysis step.

However, it is preferable to mix titanium (oxy)chloride and carboxylic acid and/or the salt thereof in advance so that titanium (oxy)chloride easily forms a complex with the carboxylic acid. Herewith, the hydrolysis reaction of titanium (oxy)chloride is controlled, and the generation of amorphous components due to hydrolysis or neutralization under unintended conditions can be more effectively inhibited.

In the second hydrolysis step, a solution containing titanium (oxy)chloride and a carboxylic acid and/or the salt thereof is added to a solution containing the product after the first hydrolysis step. In this case, it is preferable to add the solution containing titanium (oxy)chloride and the carboxylic acid and/or the salt thereof little by little (intermittently or continuously) over time rather than adding it all at once over a short period of time. In this case, the addition time of the solution containing titanium (oxy)chloride and the carboxylic acid and/or the salt thereof is preferably 10 minutes or more to 3 hours or less.

The intermittent or continuous addition of the solution containing the titanium (oxy)chloride and the carboxylic acid and/or the salt thereof in this manner is preferred because it makes easy to control the hydrolysis reaction of the titanium (oxy)chloride as well as to reduce the generation of the amorphous component by hydrolysis or neutralization under unintended conditions. Here, the term "intermittent" means a state in which the addition of the solution continues even with an interruption, and the term "continuous" means a state in which the addition of the solution continues without an interruption.

In the second hydrolysis step, the mixing amount of the carboxylic acid and/or the salt thereof used is preferably 0.4 mol% or more to 12.5 mol% or less, and more preferably 0.6 mol% or more to 4.0 mol% or less, relative to the amount of the titanium (oxy)chloride added in the second hydrolysis step.

Due to the stabilizing effect of carboxylic acid, the hydrolysis reaction related to the nucleus growth of titanium oxide particles in the second hydrolysis step is controlled, and the amorphous component generated by unintended hydrolysis reaction can be more effectively inhibited.

In particular, in the second hydrolysis step, the temperature of the solution has already been raised to 95°C or more in the first hydrolysis step, and the titanium (oxy)chloride is mixed in this condition to perform hydrolysis, so that the hydrolysis reaction of the titanium (oxy)chloride is likely to rapidly proceed. Therefore, when a predetermined amount of the carboxylic acid and/or the salt thereof is added also in the second hydrolysis step, the rapid hydrolysis reaction (as a result, the generation of the amorphous component) can be more effectively inhibited.

However, the amount of carboxylic acid mixed in the second hydrolysis step is preferably within the above range from the viewpoint of more effectively avoiding the problem of unintended hydrolysis or neutralization occurring in the subsequent step. When the amount of carboxylic acid mixed in the solution is too large, the hydrolysis reaction does not proceed sufficiently due to the stabilizing effect of the carboxylic acid, and unreacted titanium (oxy)chloride remains in the solution.

In the second hydrolysis step, the solution containing the product after the first hydrolysis step, the titanium (oxy)chloride, and the carboxylic acid and/or the salt thereof are mixed in the above-described procedure to prepare the solution, thereafter, titanium (oxy)chloride contained in the prepared solution is hydrolyzed at a temperature from 95°C or more to below the boiling point of the prepared solution. In the way, the nuclei of titanium oxide particles, which are the products in the first hydrolysis step, act as seed crystals, and the growth of the nuclei is promoted in the second hydrolysis step, so that titanium oxide particles are manufactured in the solution. The temperature of the solution in the second hydrolysis step is more preferably 97°C or more to the boiling point of the solution prepared in the second hydrolysis step or less. When the unreacted titanium (oxy)chloride remains in the solution, the generation of the amorphous component due to unintended hydrolysis or neutralization in the subsequent step can be more effectively reduced, and thus the setting of the above-described temperature range is preferred.

The pH of the solution in the second hydrolysis step is preferably adjusted to the range of 1 or less, and more preferably the range from -1 or more to 1 or less. Herewith, the hydrolysis reaction of titanium (oxy)chloride is controlled, and the generation of amorphous components due to unintended hydrolysis reactions can be more effectively inhibited. The pH of the solution can be adjusted by the amount of the titanium (oxy)chloride, the amount of the carboxylic acid and/or the salt thereof, or the like in the solution. Since the amorphous component is likely to be generated when the titanium (oxy)chloride is neutralized with the addition of an alkali, it is preferable that the titanium (oxy)chloride is hydrolyzed by heating without any addition of an alkali also in the second hydrolysis step.

In the second hydrolysis step, the solution containing the titanium (oxy)chloride and the carboxylic acid and/or the salt thereof is added to the solution containing the product after the first hydrolysis step, and then the solution may be aged for the period of several tens of minutes to several hours while keeping the temperature of the solution. The aging time is preferably 5 minutes to 3 hours. The aging can be expected to have effects such as an increase in reaction yield, a sharp particle size distribution of the titanium oxide particles to be manufactured, and an increase in crystallinity of the titanium oxide particles.

Powdered titanium oxide particles can be obtained as follows, if necessary: An alkali or acid is added to the solution containing the titanium oxide particles produced by the above method, the pH of the solution is adjusted to a range from 6 to 8, and a flocculant is optionally added, followed by filtration and drying.

<Second method for manufacturing titanium oxide particles in the present invention>

Hereinafter, the second method for manufacturing titanium oxide particles of the present invention will be described in detail.

In the first hydrolysis step of the second method for manufacturing titanium oxide particles, first, a solution containing a titanium (oxy)chloride and a carboxylic acid and/or a salt thereof is prepared. As the "titanium (oxy)chloride" and the "carboxylic acid and/or the salt thereof, those similar to in the first method for manufacturing titanium oxide particles described above can be used.

In the second method for manufacturing titanium oxide particles of the present invention, the titanium (oxy)chloride and the carboxylic acid and/or the salt are mixed to prepare a solution before the first hydrolysis reaction. If necessary, an aqueous solvent may be mixed with the solution. The aqueous solvent indicates water or a solvent prepared by mixing water with an organic solvent such as an alcohol. In a case where the organic solvent is mixed, it is preferable that the content of the organic solvent is approximately 10 mass% or less of the amount of the aqueous solvent.

In the first hydrolysis step, the order of mixing the titanium (oxy)chloride, the carboxylic acid and/or the salt thereof, and the aqueous solvent is not particularly limited. For example, it is also allowable that a solution in which the carboxylic acid and/or the salt thereof and the aqueous solvent are mixed in advance is prepared, and then this solution is mixed with the titanium (oxy)chloride; it is also allowable that a solution in which the titanium (oxy)chloride and the aqueous solvent are mixed in advance is prepared, and then this solution is mixed with the carboxylic acid and/or the salt thereof; it is also allowable that a solution in which the titanium (oxy)chloride and the carboxylic acid and/or the salt thereof are mixed in advance is prepared, and then this prepared solution is mixed with the aqueous solvent; and it is also allowable that all of the aqueous solvent, the carboxylic acid and/or the salt thereof, and the titanium (oxy)chloride are simultaneously mixed.

The concentration of the titanium (oxy)chloride in the first hydrolysis step is preferably 50 g/L or more to 200 g/L or less, and more preferably 75 g/L or more to 150 g/L or less, in terms of titanium oxide ($TiO_2$).

In the first hydrolysis step, when the concentration of titanium (oxy)chloride is within the above range, the hydrolysis reaction in the step to be definitely completed. It is preferable that the concentration of the titanium (oxy)chloride is set to the range of 200 g/L or less from the viewpoint of more effectively avoiding the following problem: when the concentration of the titanium (oxy)chloride in the first hydrolysis step is too high, the unreacted titanium (oxy)chloride remains in the solution, and in a step after the first hydrolysis step, for example, in a step of adjusting the pH to the range from 6 or more to 8 or less when the hydrolysate is filtered, the amorphous component is generated by hydrolysis or neutralization under unintended conditions. In addition, it is preferable that the concentration of the titanium (oxy)chloride is set to the range of 50 g/L or more from the viewpoint of more effectively avoiding the following problem: when the concentration of the titanium (oxy)chloride in the first hydrolysis step is too small, the manufacturing amount of the titanium oxide particles of the present invention decreases due to a decrease in the generation amount of the nuclei of the titanium oxide particles. Further, it is preferable that the concentration of the titanium (oxy)chloride is set to the range of 50 g/L or more also from the following viewpoint: the hydrolysis rate can be easily controlled, and the generation amount of the amorphous component due to an unintended hydrolysis reaction can be more effectively reduced.

The mixing amount of the carboxylic acid and/or the salt thereof used in the first hydrolysis step is preferably 0.2 mol% or more to 4.0 mol% or less, and more preferably 0.4 mol% or more to 2.0 mol% or less, relative to the amount of the titanium (oxy)chloride.

As described above, the carboxylic acid has an effect of stabilizing the titanium (oxy)chloride in the solution. It is preferable that the carboxylic acid and/or its salt be present in the solution in a mixed amount within the above range when generating the nuclei of titanium oxide particles by neutralizing the alkali in the first hydrolysis step. Herewith, the hydrolysis reaction of titanium (oxy)chloride is controlled, and the generation of amorphous components due to unintended hydrolysis reactions can be more effectively inhibited.

On the other hand, from the viewpoint of more effectively avoiding the following problems: when the mixing amount of the carboxylic acid in the solution is too large, the reaction in the first hydrolysis step does not sufficiently proceed due to the strong stabilizing effect, and thus a sufficient amount of the nuclei of the titanium oxide particles cannot be generated, it is preferable that the mixing amount of the carboxylic acid used in the first hydrolysis step is in the above-described range.

Also, the rutile ratio of the finally manufactured titanium oxide particles can be reduced by the presence of the carboxylic acid and/or the salt thereof in the solution in the first hydrolysis step.

In the first hydrolysis step of the second method for manufacturing titanium oxide particles, subsequently, an alkali is prepared. The alkali may be any substance as long as it is a compound having alkalinity, and examples thereof include hydroxides of alkali metals such as sodium hydroxide and potassium hydroxide, ammonium compounds such as an ammonia water and ammonia gas, and amine compounds such as alkylamine and ethanolamine. As the above alkali, an ammonium compound or an amine compound that does not remain as an impurity in the titanium oxide particles is preferred, and an ammonia water is particularly preferred. The alkali may be diluted with pure water or the like.

In the first hydrolysis step, the solution containing the titanium (oxy)chloride and the carboxylic acid and/or the salt thereof prepared as described above is mixed with the alkali. Thereby, the titanium (oxy)chloride is hydrolyzed (hydrolyzed by neutralization).

In the mixing step, the order of mixing the titanium (oxy)chloride, the carboxylic acid and/or the salt thereof, and the alkali is not particularly limited. That is, it is also allowable that the alkali is mixed in the solution containing the titanium (oxy)chloride and the carboxylic acid and/or the salt thereof; it is also allowable that the solution containing the titanium (oxy)chloride and the carboxylic acid and/or the salt thereof is mixed in the alkali; or it is also allowable that the solution containing the titanium (oxy)chloride and the carboxylic acid and/or the salt thereof and the alkali are simultaneously mixed. Among them, it is preferable that the solution containing the titanium (oxy)chloride and the carboxylic acid and/or the salt thereof are mixed in the alkali. This enables the generation of the amorphous component in the second hydrolysis to be more effectively reduced.

Also, in the mixing step, the temperature of the solution is set to 20°C or more to 65°C or less, preferably 30°C or more to 63°C or less, and more preferably 40°C or more to 60°C or less. At this time, each solution may be kept in the above-described temperature range before mixing; each solution may be controlled so as to reach the above-described temperature range during mixing; or each solution may be controlled so as to reach the above-described temperature range after mixing. By setting the temperature of the solution in the second hydrolysis within the above temperature range, the generation of amorphous components can be inhibited.

In the first hydrolysis step, a known mixer such as a stirrer, a mixer, a homogenizer, or an agitator can be used as necessary. The solution may be aged for the period of several tens of minutes to several hours while keeping the temperature of the solution. The aging time is preferably 5 minutes to 1.5 hours.

The pH of the solution after the first hydrolysis is preferably 5 or more to 10 or less, and more preferably 6 or more to 9.5 or less. During the aging step, a pH adjusting agent may be added as necessary so that the pH is within the above-described range. As the pH adjusting agent, a known pH adjusting agent can be used.

In the second hydrolysis step, the solution containing the product after the first hydrolysis step, the titanium (oxy)chloride, and the carboxylic acid and/or the salt thereof are mixed in the above-described procedure to prepare the solution, thereafter, titanium (oxy)chloride contained in the prepared solution is hydrolyzed at a temperature from 95 °C or more to below the boiling point of the prepared solution. In the way, the nuclei of titanium oxide particles, which are the products in the first hydrolysis step, act as seed crystals, and the growth of the nuclei is promoted in the second hydrolysis step, so that titanium oxide particles are manufactured in the solution and can reduce the generation of the amorphous component in the second hydrolysis. As for the titanium (oxy)chloride and the carboxylic acid and/or the salt thereof, those described above can be used similarly.

In the second hydrolysis step, the order of mixing the solution containing the product after the first hydrolysis step, the titanium (oxy)chloride, and the carboxylic acid and/or the salt thereof is not particularly limited. For example, it is also allowable that the titanium (oxy)chloride and the carboxylic acid and/or the salt thereof are added separately to the solution containing the product after the first hydrolysis step; and it is also allowable that a mixture in which the titanium (oxy)chloride and the carboxylic acid and/or the salt thereof are mixed in advance is prepared, and then this mixture is added to the solution containing the product after the first hydrolysis step. Also, it is allowable that a mixture in which the titanium (oxy)chloride and the carboxylic acid and/or the salt thereof are mixed in advance is prepared, and then to this mixture is added the solution containing the product after the first hydrolysis step.

However, it is preferable to mix titanium (oxy)chloride and carboxylic acid and/or its salt in advance so that titanium (oxy)chloride easily forms a complex with the carboxylic acid. Herewith, the hydrolysis reaction of titanium (oxy)chloride is controlled, and the generation of amorphous components due to hydrolysis or neutralization under unintended conditions can be more effectively inhibited.

Subsequently, the solution prepared in the above mixing step is heated to the temperature range from 95°C or more to the boiling point of the solution prepared in the above mixing step or less. The heating temperature is more preferably 97°C or more to the boiling point of the solution prepared in the above mixing step or less. The above temperature range is preferable because when unreacted titanium (oxy)chloride remains in the solution, the formation of amorphous components due to unintended hydrolysis or neutralization in subsequent steps can be more effectively inhibited. When the unreacted titanium (oxy)chloride remains in the solution, the generation of the amorphous component due to unintended hydrolysis can be more effectively reduced, and thus the setting of the above-described temperature range is preferred.

The pH of the solution in the second hydrolysis step is preferably adjusted to the range of 1 or less, and more preferably the range from -1 or more to 1 or less. Herewith, the hydrolysis reaction of titanium (oxy)chloride is controlled, and the generation of amorphous components due to unintended hydrolysis reactions can be more effectively inhibited. The pH of the solution can be adjusted by the amount of the titanium (oxy)chloride, the amount of the carboxylic acid and/or the salt thereof, or the like in the solution. When (oxy)titanium chloride is neutralized by adding an alkali in the second hydrolysis step, amorphous components are likely to be generated, so it is preferable to hydrolyze titanium (oxy)chloride by heating without adding an alkali in the hydrolysis step.

In the second hydrolysis step, the solution containing the titanium (oxy)chloride and the carboxylic acid and/or the salt thereof is added to the solution containing the product after the first hydrolysis step, and then the solution may be aged for the period of several tens of minutes to several hours while keeping the temperature of the solution. The aging time is preferably 5 minutes to 3 hours. The aging can be expected to have effects such as an increase in reaction yield, a sharp particle size distribution of the titanium oxide particles to be manufactured, and an increase in crystallinity of the titanium oxide particles.

Powdered titanium oxide particles can be obtained as follows, if necessary: an alkali or acid is added to the solution containing the titanium oxide particles produced by the above method, the pH of the solution is adjusted to a range from 6 to 8, and a flocculant is optionally added, followed by filtration and drying.

The obtained titanium oxide particles may also be subjected to wet grinding or sizing by well-known methods as necessary. Also, thereafter, the surface of the particles may be coated with a hydrous oxide, a hydroxide, an oxide, or the like of at least one metal selected from the group consisting of aluminum, silicon, zirconium, tin, titanium, and zinc as necessary. The total amount of the above compounds coated on the titanium oxide particles of the base is preferably 1% by mass or more and 50% by mass or less, more preferably 5% by mass or more and 30% by mass or less. The above-described range is preferred from the following viewpoint: when the coating amount is too small, effects such as desired weather resistance cannot be obtained; whereas when the coating amount is too large, this causes not only the agglomeration but also economical disadvantages.

Further, when the obtained titanium oxide particles are used as a catalyst support, a catalyst, a photocatalyst, or an adsorbent, a catalyst component, for example, a metal such as platinum, tungsten, copper, silver, or gold or a compound thereof may be supported on the titanium oxide particles by an ordinarily method.

In order to coat the titanium oxide particles with an inorganic compound, for example, a wet process can be used in which the inorganic compound is added, with stirring, to a slurry in which the titanium oxide particles are dispersed in water; the pH is adjusted to precipitate the inorganic compound on the surface of the titanium oxide particles; and then filtration, washing, and drying are performed.

Also, the surface of the titanium oxide particles may also be subjected to a coating treatment with an organic compound such as a fatty acid or a salt thereof, an alcohol, an alkoxysilane compound, or an aminoalkoxysilane compound. The alkoxysilane compound, aminoalkoxysilane compound, or the like may also be coated in a hydrolyzed state. The total amount of the organic compounds coated on the titanium oxide particles of the base is preferably 1% by mass or more and 50% by mass or less, more preferably 5% by mass or more and 30% by mass or less. The above-described range is preferred from the following viewpoint: when the coating amount is too small, effects such as desired dispersibility cannot be obtained; whereas when the coating amount is too large, this causes not only the agglomeration but also economical disadvantages. As for the organic compound used for the coating treatment, two or more organic compounds may be used in combination according to applications and purposes. Examples of the alkoxysilane compound include trimethoxyvinylsilane, methyltrimethoxysilane, propyltrimethoxysilane, isobutyl trimethoxysilane, n-butyl trimethoxysilane, n-hexyl trimethoxysilane, octyltrimethoxysilane, octyltriethoxysilane, n-decyl trimethoxysilane, and phenyltrimethoxysilane. Examples of the aminoalkoxysilane compound include γ-aminopropyltrimethoxysilane, γ-aminopropyltriethoxysilane, and N-β(aminoethyl)γ-aminopropyltrimethoxysilane.

In order to coat the titanium oxide particles with an organic compound, for example, any of the following processes can be used: (1) a dry process of charging the titanium oxide particles in a high-speed stirrer such as a Henschel mixer, adding an organic compound, or an aqueous or alcohol solution of an organic compound thereto dropwise or by spraying while stirring, followed by drying; or (2) a wet process of adding an organic compound, or an aqueous or alcohol solution of an organic compound to a slurry in which the titanium oxide particles are dispersed in water, while stirring, followed by filtration, washing, and drying.


**EXAMPLES**


Hereinafter, Examples of the present invention will be described. However, the present invention is not limited to these Examples.

(Example 1)

While a titanium tetrachloride solution was kept at room temperature, anhydrous citric acid (1.25 mol%) in an amount of 3 mass% relative to the amount of titanium tetrachloride (in terms of $TiO_2$) was added thereto. Pure water was further added thereto to adjust the concentration of titanium tetrachloride contained in the solution to 30 g/L in terms of $TiO_2$. The solution was stirred at room temperature for 30 minutes, and then the temperature of the solution was raised to 98°C with a heater. After the temperature was raised, the temperature of the solution was kept at 98°C for 30 minutes to perform a first hydrolysis. The pH of the solution during the first hydrolysis was 0 or less.

Subsequently, a solution in which anhydrous citric acid (1.25 mol%) in an amount of 3 mass% relative to the amount of titanium tetrachloride (in terms of $TiO_2$) was added to a solution containing titanium tetrachloride in an amount of 70 g in terms of $TiO_2$ was prepared. This solution was continuously added to the solution after the first hydrolysis over 30 minutes. During the addition, the temperature of the solution was continuously kept at 98°C to perform a second hydrolysis, and thus a slurry containing titanium oxide particles was obtained. The pH of the solution during the second hydrolysis was also 0 or less.

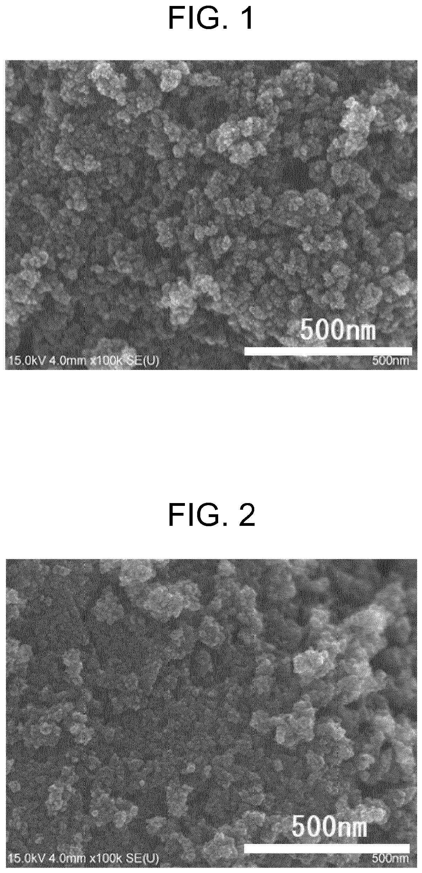

The slurry containing titanium oxide particles was neutralized with an ammonia water until the pH reached 6.5, then filtered, washed, and dried at 120°C for 16 hours, and thus titanium oxide particles of Example 1 were obtained. An electron micrograph of the titanium oxide particles of Example 1 is shown in FIG. 1.

(Example 2)

Titanium oxide particles of Example 2 were obtained in the same manner as in Example 1 except that in the second hydrolysis step in Example 1, a mixed solution of titanium tetrachloride and anhydrous citric acid was added to the solution after the first hydrolysis over 60 minutes. An electron micrograph of the titanium oxide particles of Example 1 is shown in FIG. 2.

(Example 3)

While a titanium tetrachloride solution was kept at room temperature, anhydrous citric acid (1.25 mol%) in an amount of 3 mass% relative to the amount of titanium tetrachloride (in terms of $TiO_2$) was added thereto. Pure water was further added thereto to adjust the concentration of titanium tetrachloride contained in the solution to 100 g/L in terms of $TiO_2$. This solution was stirred for 30 minutes, then the solution was added to an ammonia water over 1 hour to 2 hours, and the temperature was kept at 60°C or lower to perform a first hydrolysis. The pH of the solution during the first hydrolysis was from 7 to 9.

Subsequently, a solution in which anhydrous citric acid (0.83 mol%) in an amount of 2 mass% relative to the amount of titanium tetrachloride (in terms of $TiO_2$) was added to an aqueous solution containing titanium tetrachloride in an amount of 76.95 g in terms of $TiO_2$ was prepared. The solution after the first hydrolysis was added to this solution, and after completion of the addition, the temperature was raised to 98°C to perform a second hydrolysis, and thus a slurry containing titanium oxide particles was obtained. The pH of the solution during the second hydrolysis was 0 or less.

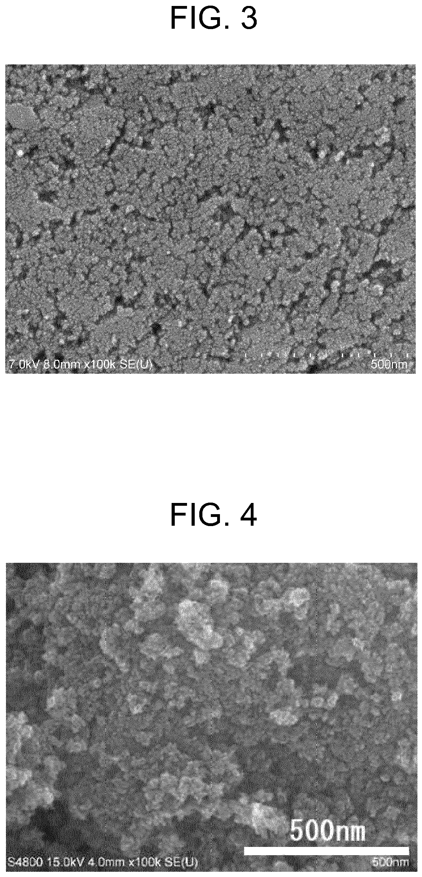

The slurry containing titanium oxide particles was neutralized with an ammonia water until the pH reached 6.5, then filtered, washed, and dried at 120°C for 16 hours, and thus titanium oxide particles of Example 3 were obtained. An electron micrograph of the titanium oxide particles of Example 3 is shown in FIG. 3.

(Comparative Example 1)

While 1 L of an aqueous solution containing 30 g/L titanium tetrachloride as $TiO_2$ was kept at room temperature, anhydrous citric acid (1.25 mol%) in an amount of 3 mass% relative to the amount of $TiO_2$ was added thereto, and the mixture was stirred for 30 minutes. The pH was 0 or less. The mixture was heated to 92°C, and then kept with stirring for 30 minutes to perform a first hydrolysis.

Then, at a temperature of 92°C, an aqueous solution containing titanium tetrachloride in an amount of 70 g in terms of $TiO_2$ and an ammonia water were simultaneously added over 60 minutes, and a second hydrolysis was performed at a pH of the solution in a range from 0.8 to 1.2.

The obtained titanium oxide slurry was neutralized with an ammonia water until the pH reached 6.5, then filtered, washed, and dried, and thus titanium oxide particles of Comparative Example 1 were obtained. An electron micrograph of the titanium oxide particles of Comparative Example 1 is shown in FIG. 4.

(Comparative Example 2)

While a titanium tetrachloride solution was kept at room temperature, anhydrous citric acid (1.25 mol%) in an amount of 3 mass% relative to the amount of titanium tetrachloride (in terms of $TiO_2$) was added thereto. Pure water was further added thereto to adjust the concentration of titanium tetrachloride contained in the solution to 100 g/L in terms of $TiO_2$. After the solution was stirred for 30 minutes, the temperature was raised to 70°C, and an ammonia water containing 120 mol% (relative to titanium tetrachloride) of ammonia was added over 30 minutes. Further, the temperature was kept to perform a first hydrolysis.

Subsequently, the temperature of the solution containing the product of the first hydrolysis was raised to 98°C and kept for 60 minutes to hydrolyze the remaining titanium tetrachloride (a second hydrolysis), and thus titanium oxide particles were precipitated.

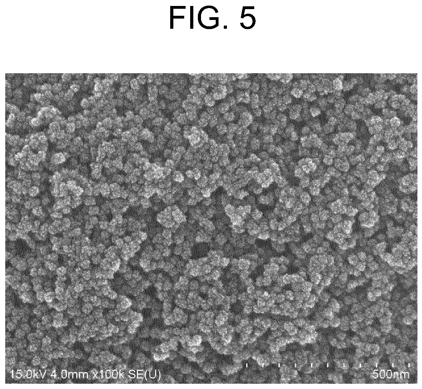

The obtained titanium oxide slurry was neutralized with an ammonia water until the pH reached 6.5, then filtered, washed, and dried, and thus titanium oxide particles of Comparative Example 2 were obtained. An electron micrograph of the titanium oxide particles of Comparative Example 2 is shown in FIG. 5.

<Evaluation 1: Crystalline Type and Rutile Ratio>

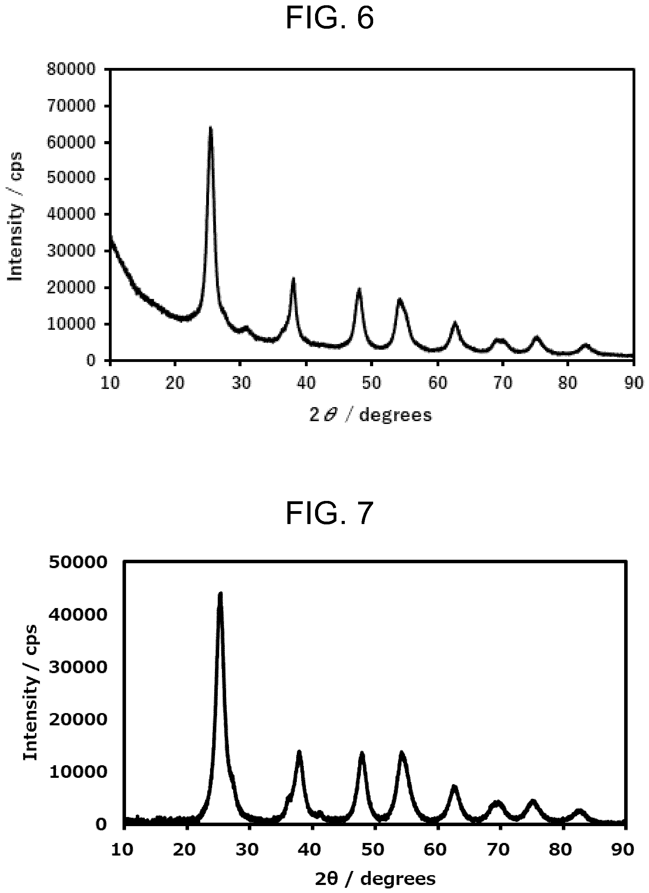

The X-ray diffraction spectrum was measured for the titanium oxide particles of the Examples and the Comparative Examples as samples using an X-ray diffractometer (Ultima IV, manufactured by Rigaku Corporation) under the following conditions: X-ray tube bulb: CuKα; tube voltage: 40 kV; tube current: 40 mA; divergence slit: 1/2°; scattering slit: 8 mm; receiving slit: open; sampling width: 0.020 degrees; and scan speed: 10.00 degree/min, thereby determining the crystalline type. The X-ray diffraction spectrum of the titanium oxide particles of Example 1 is shown in FIG. 6, and the X-ray diffraction spectrum of the titanium oxide particles of Example 3 is shown in FIG. 7.

The rutile ratio was calculated from the height of the peak of the maximum peak (2θ = 27.4°) corresponding to the rutile type crystal (Hr) and the height of the peak of the maximum peak (2θ = 25.2°) corresponding to the anatase type crystal (Ha) in the X-ray diffraction spectrum based on "Equation 2" below.

$$\text{Rutile ratio (\%)} = Hr/(Hr + Ha) \times 100 \quad \cdots \quad \text{(Equation 2)}$$

<Evaluation 2: Particle Size>

A slurry was prepared by adding 30 ml of pure water to 3 g of each of the powders of the titanium oxide particles of Examples and Comparative Examples, and further adding 3 mass% of a polycarboxylic acid-based dispersant (Nopcosperse 5600, manufactured by San Nopco Limited) to each sample. The slurry and 60 g of zircon beads with a diameter of 0.09 mmΦ as a media were placed in a 70 ml mayonnaise bottle, and dispersed in a paint shaker (Paint conditioner, manufactured by Red Devil, Inc.) for 60 minutes.

Using them as the samples for evaluation, the particle size distribution was measured by a dynamic light scattering particle size distribution analyzer (NANOTRAC (registered trademark) WAVE II EX150, manufactured by MicrotracBEL Corporation). The setting conditions for the measurement were as follows.

(1) Refractive index of solvent (water): 1.333
(2) Refractive index of titanium oxide particles

Anatase type: 2.52
Rutile type: 2.72

(3) Density of titanium oxide particles

Anatase type: 3.9 g/cm$^3$
Rutile type: 4.2 g/cm$^3$

In a case of a mixed crystal of the anatase type and the rutile type, the conditions (particle refractive index and density) for a crystalline type with a larger existing ratio were set.

The cumulative 50% particle size in volume-based cumulative particle-size distribution thus measured was defined as the average agglomerated particle diameter (D50).

<Evaluation 3: BET Specific Surface Area>

The BET specific surface area (m$^2$/g) was determined for each of the powders of the titanium oxide particles of the Examples and the Comparative Examples using a Surface Area Analyzer (FlowSorbII 2300, manufactured by Shimadzu Corporation) by a nitrogen adsorption method (BET method). At this time, the desorption was performed under a nitrogen gas flow at room temperature, and the adsorption was performed at 77 K.

<Evaluation 4: Quantification of Amorphous Component>

The thermal history when the heating temperature of a sample was changed was measured as a DSC curve for each of the powders of the titanium oxide particles of the Examples and the Comparative Examples as the sample by means of a differential scanning calorimeter ThermoPuls EVO2 DSC Vesta (manufactured by Rigaku Corporation). A "Pt pan" for measurement (outer diameter: 5 mmΦ) was filled with 5 mg of a measurement sample, and an empty Pt pan was used as a reference sample. Measurement conditions of DSC are as follows.

(1) Heating rate: 10°C/min
(2) Measurement temperature range: from room temperature to 600°C
(3) Measurement atmosphere: air

Based on the above measurement results, the heat of crystallization was calculated from the area of the exothermic peak due to crystallization of the amorphous component detected at a measurement temperature from 300°C to 600°C using the method described in the above reference (specifically, "Satoshi Kawase, Kenichi Sugimoto, Rise Fujiwara, Satomi Ono, BUNSEKI KAGAKU, Vol. 59, No. 10, pp. 921-926 (2010)").

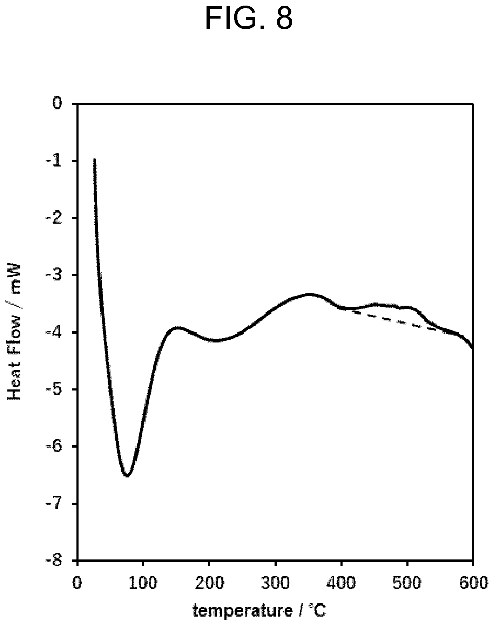

The DSC curve of the titanium oxide particles of Example 1 is shown in FIG. 8. As shown in the Fig., in the titanium oxide particles of Example 1, two exothermic peaks were observed in the range from 300°C to 600°C. As for these exothermic peaks, the exothermic peak observed around 350°C is an exothermic peak when citric acid contained in the titanium oxide particles is decomposed, and the exothermic peak observed in the range from 400°C to around 500°C is an exothermic peak when the amorphous component contained in the titanium oxide particles is crystallized.

Therefore, in Example 1, the crystallization heat ΔH (J/g) was calculated from the area of the portion surrounded by the solid line (i.e., DSC curve) and the broken line in FIG. 8 for the exothermic peak observed in the range from 400°C to around 500°C. The end point of the broken line was determined by means of Rietveld analysis.

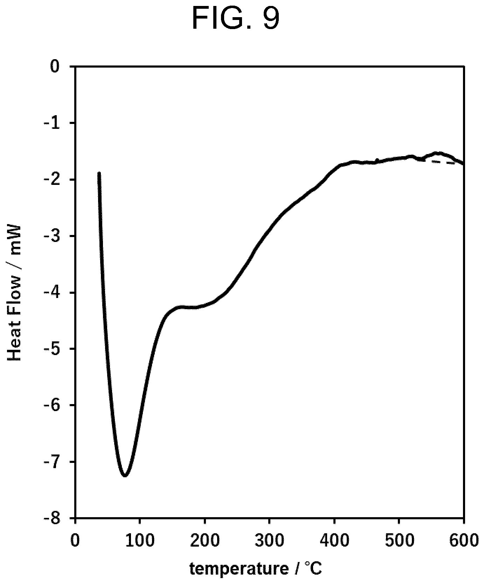

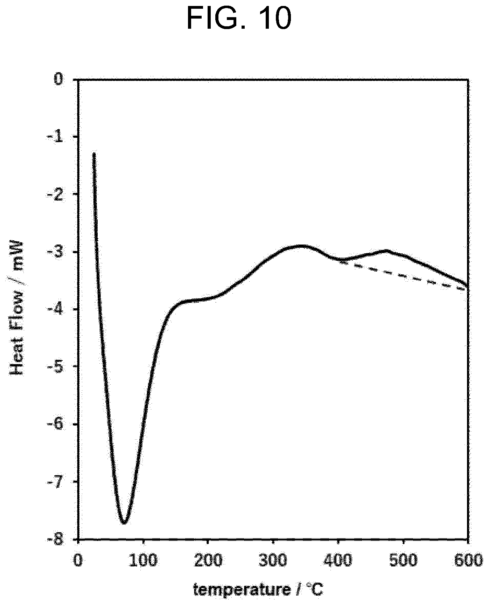

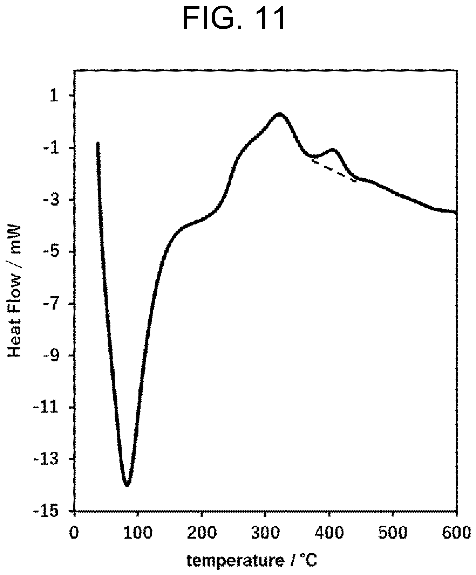

Also in Example 2 (not shown), Example 3 (see FIG. 9), Comparative Example 1 (see FIG. 10) and Comparative Example 2 (see FIG. 11), two exothermic peaks were observed in the range from 300°C to 600°C in the DSC curve for the reason that citric acid was used during manufacture of the titanium oxide particles in the same manner as in Example 1. Therefore, also in Example 2, Example 3, Comparative Example 1, and Comparative Example 2, the crystallization heat ΔH (J/g) was calculated in the same manner as in Example 1.

Furthermore, the amount of the amorphous component contained in the titanium oxide particles of the present invention was calculated based on Equation 3 below using the above literature value (217 J/g) as the value of the crystallization heat of the sample (amorphous titanium oxide) containing the amorphous component at 100 mass%.

$$\text{Amount of amorphous component (mass\%) in sample} = \Delta H/217 \times 100 \quad \cdots \quad \text{(Equation 3)}$$

The average agglomerated particle diameter (D50), the BET specific surface area, the rutile ratio, and the content of the amorphous component measured by the above-described methods are shown in Table 1.

[Table 1]

| | D50 (nm) | BET specific surface area (m²/g) | Rutile ratio (%) | Content of amorphous component (mass%) |
|---|---|---|---|---|
| Example 1 | 73.6 | 216 | 0 | 3.7 |
| Example 2 | 75.7 | 206 | 0 | 3.3 |
| Example 3 | 87.8 | 348 | 0 | 1.0 |
| Comparative Example 1 | 67.4 | 252 | 0 | 8.4 |
| Comparative Example 2 | 86.7 | 343 | 0 | 8.3 |

As shown in Table 1, it has been found that in the titanium oxide particles of Example 1, Example 2, and Example 3 of the present invention, the content of the amorphous component is reduced as compared to the titanium oxide particles of Comparative Example 1 and Comparative Example 2.

In the second hydrolysis step in the first manufacturing method of the present invention, the temperature of the reaction solution has already reached a high temperature.

In the first manufacturing method of the present invention, in a case of the titanium oxide particles of Example 1 and Example 2, citric acid is added together with titanium tetrachloride not only in the step of the first hydrolysis (nucleus generation) but also in the step of the second hydrolysis (nucleus growth). This enables rapid progress of the reaction to be reduced even when the temperature in the step of the second hydrolysis is high. As a result, it has been understood that the generation of the amorphous component is reduced.

On the other hand, in a case of the titanium oxide particles of Comparative Example 1, citric acid is not additionally added in the step of the second hydrolysis (nucleus growth). Since the reaction solution after the first hydrolysis step has already reached a high temperature, when titanium tetrachloride is solely mixed therein, the hydrolysis reaction is likely to rapidly proceed. Due to such a factor, in Comparative Example 1, the amorphous component is likely to be generated.

In a case of the titanium oxide particles of Comparative Example 2, titanium tetrachloride remaining in the first hydrolysis step is thermally hydrolyzed in the second hydrolysis step. Meanwhile, in a case of the titanium oxide particles of Example 3 in which the second manufacturing method of the present invention is used, the solution containing the product of the first hydrolysis is added and mixed in the solution containing titanium tetrachloride and citric acid in the step of the second hydrolysis to thermally hydrolyze the newly added titanium tetrachloride. That is, in a case of the titanium oxide particles of Example 3, unlike the case of the titanium oxide particles of Comparative Example 2, titanium tetrachloride added in the first hydrolysis step is completely hydrolyzed in the first hydrolysis step, and newly added titanium tetrachloride is hydrolyzed in the second hydrolysis step. This enables an unintended hydrolysis reaction to be reduced. As a result, it is understood that the generation of the amorphous component is reduced.

By the way, when the formulation design of reducing the content of the amorphous component is adopted as in the titanium oxide particles of the present invention, the agglomerated particle diameter (D50) can increase or the BET specific surface area can decrease in some cases. In this respect, the titanium oxide particles of Example 1, Example 2, and Example 3 of the present invention can maintain an agglomerated particle diameter (D50) and a BET specific surface area comparable to those of the titanium oxide particles of Comparative Example 1 and Comparative Example 2 having a relatively small agglomerated particle diameter and a relatively large BET specific surface area.

**INDUSTRIAL APPLICABILITY**

The titanium oxide particles of the present invention have a sufficiently small average agglomerated particle diameter (D50) and contains a sufficiently reduced amount of the amorphous component. Since the titanium oxide particles of the present invention are easily disintegrated by means such as grinding, it is expected that the particle diameter of a titanium composite oxide obtained by using the titanium oxide particles of the present invention as a material is small, and the titanium oxide particles of the present invention are useful as a material for manufacturing a titanium composite oxide. Also, the titanium oxide particles of the present invention are also useful as a catalyst support, a catalyst, a photocatalyst, an adsorbent, and the like.

**Claims**

1. Titanium oxide particles, wherein an average agglomerated particle diameter (D50) is 15 nm or more to 200 nm or less, and a content of an amorphous component is 7 mass% or less.

2. The titanium oxide particles according to claim 1, wherein a BET specific surface area is 100 $m^2$/g or more to 400 $m^2$/g or less.

3. A method for manufacturing titanium oxide particles, comprising:

    a first hydrolysis step of heating a solution containing a titanium (oxy)chloride and a carboxylic acid and/or a salt thereof at a temperature from 95°C or more to a boiling point of the solution in the first hydrolysis step or less; and
    a second hydrolysis step of heating a solution prepared by mixing a solution containing a product after the first hydrolysis step, a titanium (oxy)chloride, and a carboxylic acid and/or a salt thereof at a temperature from 95°C or more to a boiling point of the solution prepared in the second hydrolysis step or less.

4. The method for manufacturing titanium oxide particles according to claim 3, wherein in the second hydrolysis step, a solution containing the titanium (oxy)chloride and the carboxylic acid and/or the salt thereof is mixed with the solution containing the product after the first hydrolysis step.

5. The method for manufacturing titanium oxide particles according to claim 3 or 4,
   wherein in the second hydrolysis step, the solution containing the titanium (oxy)chloride and the carboxylic acid and/or the salt thereof is intermittently or continuously added to the solution containing the product after the first hydrolysis step.

6. A method for manufacturing titanium oxide particles, comprising:

   a first hydrolysis step of mixing a solution containing a titanium (oxy)chloride and a carboxylic acid and/or a salt thereof with an alkali at a temperature from 20°C or more to 65°C or less; and
   a second hydrolysis step of heating a solution prepared by mixing a solution containing a product after the first hydrolysis step, a titanium (oxy)chloride, and a carboxylic acid and/or a salt thereof at a temperature from 95°C or more to a boiling point of the solution prepared in the second hydrolysis step or less.

7. The method for manufacturing titanium oxide particles according to claim 6, wherein in the first step hydrolysis of performing hydrolysis by neutralization, the solution containing the titanium (oxy)chloride and the carboxylic acid and/or the salt thereof is added to the alkali.

# FIG. 1

# FIG. 2

# FIG. 3

# FIG. 4

FIG. 5

# FIG. 6

# FIG. 7

# FIG. 8

FIG. 9

## FIG. 10

# FIG. 11

## INTERNATIONAL SEARCH REPORT

| International application No. |
| --- |
| **PCT/JP2022/026197** |

### A. CLASSIFICATION OF SUBJECT MATTER

*C01G 23/053*(2006.01)i
FI:  C01G23/053

According to International Patent Classification (IPC) or to both national classification and IPC

### B. FIELDS SEARCHED

Minimum documentation searched (classification system followed by classification symbols)

C01G23/04-23/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JMEDChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | JP 2000-506487 A (RHONE-POULENC CIMIE) 30 May 2000 (2000-05-30)<br>    p. 11, line 4 to p. 15, line 18, examples 1, 2 | 1-2 |
| Y | | 6-7 |
| X | JP 2006-89297 A (SHISEIDO CO., LTD.) 06 April 2006 (2006-04-06)<br>    paragraphs [0023]-[0026], [0032] | 1-2 |
| X | WO 2012/111717 A1 (NISSAN CHEMICAL INDUSTRIES, LTD.) 23 August 2012<br>(2012-08-23)<br>    paragraphs [0028]-[0045] | 1 |
| Y | WO 2016/002755 A1 (ISHIHARA SANGYO KAISHA, LTD.) 07 January 2016 (2016-01-07)<br>    paragraphs [0007], [0014]-[0019], [0021], [0024], examples 12, 13, 21, 22 | 3-7 |
| Y | JP 63-8218 A (MITSUBISHI METAL CORP.) 14 January 1988 (1988-01-14)<br>    p. 2, upper right column, lines 2-14, table 1 | 3-7 |
| A | WO 2011/031479 A2 (THE NATIONAL TITANIUM DIOXIDE CO., LTD.) 17 March 2011<br>(2011-03-17) | 1–7 |

☑ Further documents are listed in the continuation of Box C.    ☑ See patent family annex.

| | |
| --- | --- |
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **16 August 2022** | **30 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/026197** |

**C.    DOCUMENTS CONSIDERED TO BE RELEVANT**

| Category* | Citation of document, with indication, where appropriate, of the relevant passages | Relevant to claim No. |
|---|---|---|
| A | 川瀬聡ら, 酸化チタン光触媒粉体におけるアモルファス量の分析, 分析化学, 2010, vol. 59, no. 10, pp. 921-926, ISSN 0525-1931 (KAWASE, Satoshi et al. Quantitative Analysis of Amorphous Contents in Photocatalytic Titania Powders. Japan Society for Analytical Chemistry.) | 1-2 |

Form PCT/ISA/210 (second sheet) (January 2015)

**INTERNATIONAL SEARCH REPORT**
Information on patent family members

International application No.

**PCT/JP2022/026197**

| Patent document cited in search report | | | Publication date (day/month/year) | Patent family member(s) | | | Publication date (day/month/year) |
|---|---|---|---|---|---|---|---|
| JP | 2000-506487 | A | 30 May 2000 | US | 6187438 | B1 | |
| | | | | column 5, line 26 to column 8, line 23, examples 1, 2 | | | |
| | | | | AT | 207038 | T | |
| | | | | AU | 3547497 | A | |
| | | | | BR | 9710247 | A | |
| | | | | CA | 2259281 | A1 | |
| | | | | DE | 69707461 | T2 | |
| | | | | DK | 0910549 | T3 | |
| | | | | EP | 0910549 | B1 | |
| | | | | ES | 2163179 | T3 | |
| | | | | FR | 2750693 | A1 | |
| | | | | FR | 2753980 | A1 | |
| | | | | PT | 910549 | E | |
| | | | | WO | 1998/001392 | A1 | |
| JP | 2006-89297 | A | 06 April 2006 | (Family: none) | | | |
| WO | 2012/111717 | A1 | 23 August 2012 | EP | 2676934 | A1 | |
| | | | | paragraphs [0028]-[0046] | | | |
| | | | | CN | 103380083 | A | |
| | | | | HU | E037418 | T2 | |
| | | | | KR | 10-2014-0016290 | A | |
| | | | | TW | 201247545 | A | |
| | | | | US | 2013/0331463 | A1 | |
| WO | 2016/002755 | A1 | 07 January 2016 | US | 2017/0137301 | A1 | |
| | | | | paragraphs [0048], [0070]-[0081], [0083], [0086], examples 12, 13, 21, 22 | | | |
| | | | | CA | 2953901 | A1 | |
| | | | | CN | 106536415 | A | |
| | | | | EP | 3165509 | A1 | |
| | | | | HK | 1232205 | A1 | |
| | | | | KR | 10-2017-0024073 | A | |
| | | | | TW | 201615553 | A | |
| JP | 63-8218 | A | 14 January 1988 | (Family: none) | | | |
| WO | 2011/031479 | A2 | 17 March 2011 | AU | 2010292604 | A1 | |
| | | | | EP | 2475619 | A2 | |
| | | | | US | 2011/0059315 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016002755 A1
- WO 2019189307 A1
- JP 2011063496 A

**Non-patent literature cited in the description**

- **SATOSHI KAWASE ; KENICHI SUGIMOTO ; RISE FUJIWARA ; SATOMI ONO.** *BUNSEKI KAGAKU,* 2010, vol. 59 (10), 921-926
- **B. OHTANI ; Y. OGAWA ; S. NISHIMOTO.** *J. Phys. Chem., B,* 1997, vol. 101, 3746